(19) Europäisches Patentamt

European Patent Office

Office européen des brevets

(11) EP 0 882 990 A2

(12) EUROPÄISCHE PATENTANMELDUNG

(43) Veröffentlichungstag:
09.12.1998 Patentblatt 1998/50

(51) Int. Cl.⁶: **G01R 15/18**, H02H 1/00,
H01F 27/42

(21) Anmeldenummer: 98109248.9

(22) Anmeldetag: 20.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 04.06.1997 DE 19723422

(71) Anmelder:
SIEMENS AKTIENGESELLSCHAFT
80333 München (DE)

(72) Erfinder:
• Krebs, Rainer, Dr.
91052 Erlangen (DE)
• Kumar, Anil, Dr.
91056 Erlangen (DE)
• Ammon, Jörg
91054 Erlangen (DE)

(54) **Verfahren und Vorrichtung zur Erkennung und Korrektur eines gesättigten Stromverlaufs eines Stromwandlers**

(57)   Um in besonders einfacher und zuverlässiger Weise einen gesättigten Stromverlauf eines Stromwandlers (1) zu erkennen und zu korrigieren, wird auf der Basis einer Mustererkennung zunächst der Sättigungsanfang (SA) mittels einer Anzahl von aus Abtastwerten ($i_A$) des aktuellen Stromsignalverlaufs (i(t), $i_s$(t)) abgeleiteten logischen Abfragen detektiert. Anschließend wird das Sättigungsende (SE) ebenfalls anhand einer Anzahl von logischen Abfragen ermittelt. Aus einer Verknüpfung der logischen Abfragen wird dann ein Sättigungssignal (f(t)) gebildet. Bei Sättigungserkennung werden die aktuellen Abtastwerte ($i_A$) verworfen und es wird aus einer Anzahl von zeitlich vor der Sättigungserkennung ermittelten Abtastwerten ($i_A$) ein Abbild ($i_a$(t), $i_{a50}$(t)) des ungesättigten Stromsignalverlaufs (i(t)) rekonstruiert.

Fig. 2

**Beschreibung**

Die Erfindung bezieht sich auf ein Verfahren zur Erkennung und Korrektur eines gesättigten Stromverlaufs eines Stromwandlers, insbesondere für ein Mittel- oder Hochspannungsnetz, anhand eines für einen gesättigten Stromsignalverlauf charakteristischen Musters. Sie bezieht sich weiter auf eine Vorrichtung zur Durchführung des Verfahrens.

Zur Sicherung des Betriebs eines Energieversorgungsnetzes muß eine Netzstörung z.B. aufgrund eines Kurzschlusses erkannt und lokalisiert werden. Dazu eingesetzte Schutzeinrichtungen oder Schutzgeräte arbeiten nicht nur besonders schnell, sondern auch selektiv, so daß der Störungsort vom Schutzgerät lokalisiert und lediglich das gestörte Betriebsmittel abgeschalten wird. Für einen korrekt arbeitenden Netzschutz ist daher eine genaue Kenntnis des Übertragungsverhaltens eines dem Schutzgerät zugeordneten Meßwandlers oder Stromwandlers von besonderer Bedeutung. Da zudem der Primärstrom in einem derartigen Energieversorgungsnetz im störungsfreien Betrieb mehr als 100A, insbesondere mehr als 400A, und im Kurzschlußfall mehr als 10kA, insbesondere mehr als 40kA, betragen kann, wird üblicherweise außerdem ein besonders großer dynamischer Arbeitsbereich des Meß- oder Stromwandlers gefordert. Dieser dynamische Arbeitsbereich ist jedoch durch die infolge auftretender Kernsättigung nicht lineare magnetische Kopplung zwischen einer Primär- und einer Sekundärwicklung des Stromwandlers eingeschränkt, so daß der Sekundärstrom bei gesättigtem Stromwandler nur noch bruchstückhaft ein Abbild des Primärstroms darstellt. Dies kann zu Fehlfunktionen des Schutzgerätes führen.

Auf Höchstspannungsebene werden deshalb häufig Stromwandler mit Antiremanenzluftspalt eingesetzt, oder es werden die eingesetzten Stromwandler derart überdimensioniert, daß sie selbst einen vollverlagerten Kurzschlußstrom sättigungsfrei übertragen können. Der Einsatz eines solchen, überdimensionierten Stromwandlers ist jedoch besonders kostenintensiv und somit, insbesondere für Mittel- und Hochspannungsnetze, äußerst unwirtschaftlich.

Eine kostengünstigere Möglichkeit besteht in der Entwicklung von Algorithmen zur Rückrechnung vom gesättigten Stromverlauf auf den ungesättigten Stromverlauf des Stromwandlers, wobei eine genaue Rückrechnung des gesättigten Stroms allerdings besonders rechenzeitintensiv ist. So ist z. B. aus der WO 93/13581 eine numerische Methode zur Rekonstruktion gesättigter Transformatorstromsignale bekannt geworden, bei der anhand eines Transformatormodells für den ungesättigten und den gesättigten Transformatorstrom sowie eines Modells für den Primärstrom eine Sättigung sowie deren Sättigungsende eines zeitdiskret gemessenen Sekundärstroms ermittelt werden.

Aus der EP 0 090 095 A1 ist ein Auswerteverfahren für den Sekundärstrom eines primärseitig in eine Leitung eines Energieversorgungsnetzes geschalteten Stromwandlers bekannt, bei dem anhand eines für einen gesättigten Stromsignalverlauf charakteristischen Musters ein Sättigungssignal erzeugt wird. Dazu erfolgt eine Fourier-Analyse netzfremder Frequenzen, wobei durch einen Vergleich zwischen dem gefilterten und dem ungefilterten Sekundärstrom dessen Sättigung erkannt wird. Eine vergleichsweise schnelle Erkennung einer Wandlersättigung wird durch das in der DE 39 38 154 A1 beschriebene Verfahren erreicht, bei dem durch Bildung des Raumzeigers der sekundären Wandlerströme bei gesperrter Grundschwingungs-Gegenkomponente eine mögliche Abweichung von der charakteristischen Stromform erkannt wird.

Aufgabe der Erfindung ist es, ein besonders einfaches Verfahren zur Erkennung und anschließenden Korrektur eines gesättigten Stromverlaufs eines Stromwandlers anzugeben. Weiter soll eine zur Durchführung des Verfahrens besonders geeignete Vorrichtung angegeben werden.

Bezüglich des Verfahrens wird diese Aufgabe gelöst durch die Merkmale des Anspruchs 1. Dabei wird auf der Basis einer Mustererkennung zunächst der Sättigungsanfang oder -beginn mittels einer Anzahl von aus Abtastwerten des aktuellen Stromsignalverlaufs abgeleiteten logischen Abfragen detektiert. Anschließend wird das Sättigungsende ebenfalls anhand einer Anzahl von logischen Abfragen ermittelt, wobei zur Detektion des Sättigungsanfangs und des Sättigungsendes in komplementären Signalbereichen die Signalsteigung ermittelt wird. Aus einer Verknüpfung der logischen Abfragen wird dann ein Sättigungssignal gebildet. Bei Sättigungserkennung werden die aktuellen Abtastwerte verworfen und es wird aus einer Anzahl von zeitlich vor der Sättigungserkennung ermittelten Abtastwerten ein Abbild des ungesättigten Stromsignalverlaufs rekonstruiert.

Die Erfindung geht dabei von der Überlegung aus, daß einerseits im Normalbetrieb ungesättigte, originale Stromwerte oder Abtastwerte des Stromsignalverlaufs zur Weiterverarbeitung weitergeleitet werden sollen. Andererseits sollen nur dann diese Originalwerte durch approximierte Werte ersetzt werden, wenn eine Sättigung tatsächlich vorliegt. Bezüglich einer Sättigungsdetektion erfolgt dies in besonders einfacher und zuverlässiger Weise anhand einer Mustererkennung eines typischen Sättigungsverlauf.

Bezüglich der Rekonstruktion des ungesättigten Stromsignalverlaufs liegt der Erfindung die Erkenntnis zugrunde, daß unter Zugrundelegung des sogenannten Least-Square-Ansatzes auf dessen Exponentialanteil verzichtet werden kann und lediglich der Grundschwingungsanteil gemäß der Beziehung:

$$i(t) = c_c \cos(\omega t) + c_s \sin(\omega t) + c_0$$

zur Generierung eines Abbildes des ungesättigten Stromsignalverlaufs zu berücksichtigen ist. Eine vollständige Rekonstruktion des ungesättigten Stromsignalverlaufs ist somit nicht erforderlich. Vielmehr kann allein mit dem Grundschwingungsanteil ein ausreichend gutes oder genaues Abbild des ungesättigten Stromsignalverlaufs erzeugt werden. Dies gilt insbesondere bei nur wenigen verfügbaren Stützstellen oder Abtastwerten.

Für die Detektion des Sättigungsbeginns muß als Abfragebedingung lediglich erfüllt sein, daß einerseits bei einem ersten Abtastwert ein den Sekundärstromverlauf charakterisierendes Signal sättigungsfrei ist, und daß andererseits bei einer positiven Halbwelle des Signals eine negative Steigung vorhanden ist. In diesem Fall wird dem Sättigungssignal z.B. ein positiver Wert, vorzugsweise der Wert "1", zugeordnet. Analog wird aufgrund des komplementären Verhaltens der Halbwellen eines sinusförmigen Signals der negativen Halbwelle als Kriterium für den Sättigungsbeginn eine positive Steigung zugeordnet, so daß dem Sättigungssignal ein invertierter oder negativer Wert, z. B. der Wert "-1", zugeordnet wird. Ist keines der genannten Kriterien erfüllt, so liegt keine Sättigung vor und es wird dem Sättigungssignal vorzugsweise der Wert "0" zugeordnet.

Zweckmäßigerweise wird der Betrag der ermittelten Steigung verglichen mit einem mit einem Steigungsfaktor gewichteten Referenzwert. Durch Steuerung dieses Steigungsfaktors, der das Verhältnis zwischen der ermittelten Steigung und der Referenzsteigung angibt, läßt sich somit vorteilhafterweise die Empfindlichkeit der Detektion des Sättigungsanfangs einstellen. Dabei wird der Steigungsfaktor zwischen einem eine Überreaktion oder eine unerwünschte Empfindlichkeit repräsentierenden ersten Grenzwert und einem ein Nichterkennen einer Sättigung repräsentierten zweiten Grenzwert eingestellt.

Zur Detektion des Sättigungsendes werden zweckmäßigerweise zusätzlich zum Kriterium des Vorhandenseins eines Sättigungsanfangs als weitere Kriterien der Stromwert und die Steigung einer der nachfolgenden komplementären Halbwellen herangezogen. Bezüglich des Stromwertes wird festgestellt, ob dieser über der zweifachen Amplitude des Nennstroms liegt.

Die Aufstellung der Kriterien zur Detektion des Sättigungsendes geht von der Erkenntnis aus, daß bei Erkennung eines Sättigungsanfangs gemäß einem bestimmten und stets zumindest annähern gleichen Muster im jeweils komplementären Signalbereich auf einen flachen Kurventeil ein steiler Kurventeil folgt. Ist daher Sättigung bei positiver Halbwelle ermittelt worden, so wird im Negativen nach einem solchen flachen Kurvenabschnitt mit einer geringen negativen Steigung gesucht. Ist ein solches Kurvenstück vorhanden, so wird die Erkennung auf das steile Kurvenstück freigegeben. Dieses steile Kurvenstück muß sich dann im Negativen befinden und die Steigung muß negativ sein. Außerdem sollte der Betrag der Steigung im Vergleich zum Referenzwert ein bestimmtes Verhältnis aufweisen.

sen.

Als weiteres Kriterium kann herangezogen werden, daß die entsprechende Steigung bei einem Kurvenstück auftreten muß, dessen Betrag an dieser Stelle über der zweifachen Amplitude des Nennstromes liegt. Ist ein solches Kurvenstück gefunden worden, so wird auf Sättigungsende erkannt. Analoges gilt bei Sättigung im Negativen. Auch hier wird der Betrag der Steigung mit dem mit einem weiteren Steigungsfaktor gewichteten Referenzwert verglichen.

Bezüglich der Vorrichtung wird die genannte Aufgabe gelöst durch die Merkmale des Anspruchs 8.

Die mit der Erfindung erzielten Vorteile bestehen insbesondere darin, daß durch Erzeugung eines Sättigungssignals auf der Basis einer Mustererkennung mit Detektion lediglich eines Sättigungsanfangs und eines zugehörigen Sättigungsendes zwischen einem gesättigten und einem ungesättigten Stromsignalverlauf sicher unterschieden werden kann. Dadurch ist in einfacher und zuverlässiger Weise feststellbar, zu welchen Zeitpunkten der Stromsignalverlauf zu rekonstruieren ist. Ebenso wird der Zeitpunkt festgestellt, ab wann nicht mehr gefiltert approximiert werden soll. Die Sättigungserkennung und -korrektur kann daher mit einem besonders rechnerzeiteffektiven Algorithmus zuverlässig durchgeführt werden.

Nachfolgend werden Ausführungsbeispiele der Erfindung anhand einer Zeichnung näher erläutert. Darin zeigen:

FIG 1    schematisch einen Stromwandler mit nachgeschalteter Vorrichtung zur Sättigungserkennung und Sättigungskorrektur,

FIG 2    die Funktionsweise eines Sättigungsdetektors, und

FIG 3    Signalverläufe zur Sättigungskorrektur.

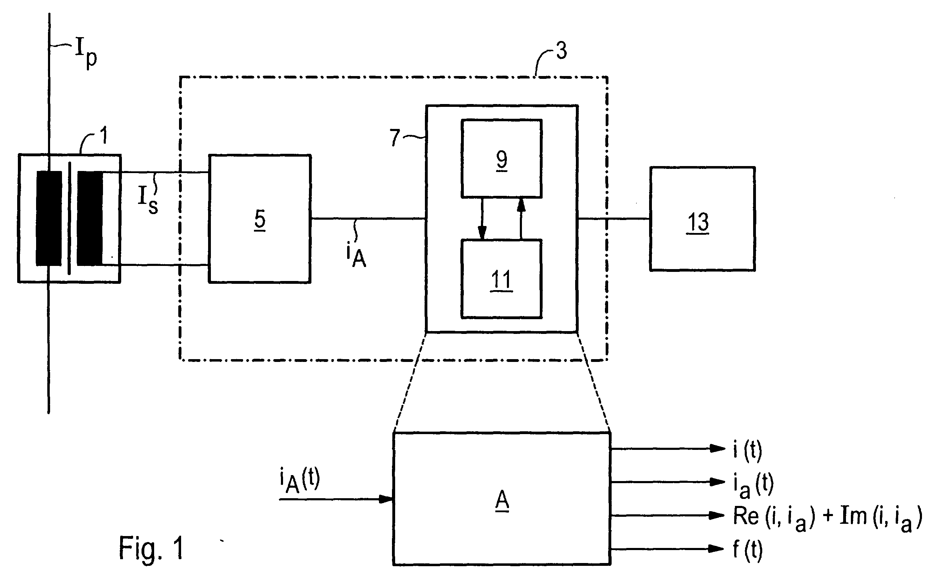

FIG 1 zeigt einen Stromwandler 1, der durch Transformation einen Primärstrom $I_p$ eines Energieversorgungsnetzes mit einem bestimmten Übersetzungsverhältnis in einen vergleichsweise niedrigen Sekundärstrom $I_s$ umwandelt. Bei Idealisierung eines derartigen Stromwandlers oder Wandlers 1 kann die sogenannte Kniepunktspannung als Kriterium zur Unterteilung des Sättigungsverhaltens des Wandlers 1 in einen ungesättigten und in einen gesättigten Bereich herangezogen werden. Dabei stellt die Kniepunktspannung denjenigen Punkt der Magnetisierungskurve des Wandlers 1 dar, bei dem eine zehnprozentige Spannungserhöhung eine fünfzigprozentige Erhöhung des Magnetisierungsstroms bewirkt. Der vom Wandler 1 auf dessen Sekundärseite transformierte Primärstrom $I_p$ fließt dann nicht mehr über die eigentliche Bürde, sondern über die Hauptinduktivität des Wandlers 1. Die Folge ist ein Zusammenbrechen des Sekundärstroms $I_s$, der dann nur noch zeitweise eine exakte Abbildung des Primärstroms $I_p$ darstellt. Durch Kenntnis des prinzipiellen Verlaufs einiger Wandlerkennlinien, aus denen im Mittel

eine ungesättigte Hauptinduktivität $L_h$ in der Größenordnung von 400 Henry entnommen werden kann, sowie der Kniepunktspannung $U_k$ und des dazugehörigen Magnetisierungsstroms $I_M$ kann bei eisengeschlossenen Wandlern eine zumindest größenordnungsmäßig passende Kennlinie generiert werden.

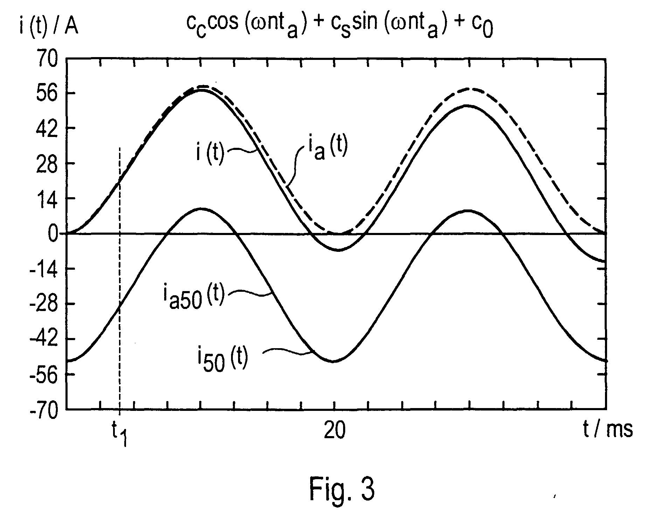

Zur Erkennung einer Sättigung des Wandlers 1 einerseits und zur Rekonstruktion des ungesättigten Stromverlaufs oder Stromsignalverlaufs i(t) bei Auftreten eines Sättigungsstroms $i_s$ andererseits ist eine Sättigungsdetektions- und Korrekturvorrichtung 3 vorgesehen. Diese umfaßt einen dem Wandler 1 nachgeschalteten Analog/Digital-Wandler 5 und eine Auswerteeinrichtung 7 mit einem Sättigungsdetektor 9 und mit einem Aufbaufilter 11 zur Ermittlung eines Abbildes (FIG 3) des ungesättigten Stromsignalverlaufs i(t). Der Vorrichtung 3 ist ein Filter- oder Relaisbaustein 13 mit z.B. einem Filteralgorithmus zur Weiterverarbeitung der von der Auswerteeinrichtung 7 gelieferten Daten nachgeschaltet.

Während des Betriebs des Wandlers 1 liefert der Analog/Digital-Wandler 5 eine Anzahl von Abtastwerte $i_A$ des Sekundärstroms $I_s$ als Stützstellen, anhand derer in der Auswerteeinrichtung 7 eine Sättigungserkennung einerseits und bei detektierter Sättigung eine Rekonstruktion des ungesättigten Stromsignals oder Stromsignalverlaufs i(t) erfolgt. Vom in der Einrichtung 7 hinterlegten (herausgezeichneten) Algorithmus A werden als Ausgabedaten der tatsächliche Stromsignalverlauf i(t) bei ungesättigtem Wandler 1 sowie ein approximierter Stromsignalverlauf $i_a(t)$ und ein Sättigungssignal f(t) bei Sättigungserkennung, d. h. gesättigtem Wandler 1, generierten. Außerdem werden für eine vektorielle Auswertung der Real- und Imaginärteil Re(i(t), $i_a(t)$) bzw. Im(i(t), $i_a(t)$) des Stromsignals i, $i_s$ generiert.

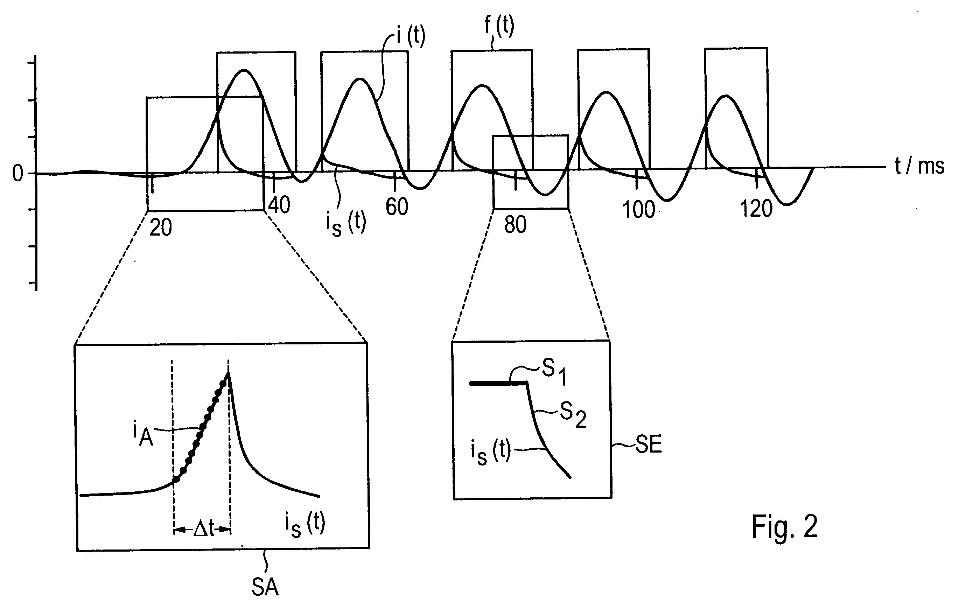

Die Funktionsweise der Vorrichtung 3 zur Sättigungserkennung und Sättigungskorrektur ergibt sich aus der Darstellung gemäß FIG 2. Ziel des Verfahrens ist es, solange als möglich ungesättigte Originalstrom-Abtastwerte $i_A$ unverändert an den Baustein 13 weiterzuleiten und nur bei tatsächlich vorliegender Sättigung die Abtastwerte $i_A$ durch approximierte Werte $i_a$ zu ersetzen. Die Sättigungserkennung erfolgt mittels des Sättigungsdetektor 9 anhand einer Mustererkennung eines typischen Sättigungsstromverlaufs $i_s(t)$. Detektiert wird lediglich der Sättigungsbeginn oder Sättigungsanfang SA und ein zugehöriges Sättigungsende SE. Die entsprechenden Signalbereiche des Sättigungsanfangs SA und des Sättigungsendes SE sind in FIG 2 in größerem Maßstab herausgezeichnet.

Zur Erkennung und Detektion sowohl des Sättigungsanfangs SA als auch des Sättigungsendes SE sind vorteilhafterweise nur wenige logische Abfragen notwendig. Das gesättigte Stromsignal $i_s$ ist in FIG 2 auf den vom ungesättigten Stromsignal i repräsentierten Primärstrom $I_p$ normiert. Ein vom Sättigungsdetektor 9 geliefertes Sättigungssignal f(t) ist null (f(t) = 0), wenn

kein gesättigter Stromsignalverlauf $i_s(t)$ vorliegt. Das Sättigungssignal f(t) ist eins (f(t) = 1), wenn ein gesättigter Stromsignalverlauf $i_s(t)$ auf der positiven Halbwelle vorliegt. Es ist minus eins (f(t) = -1), wenn Sättigung auf der negativen Halbwelle auftritt.

Das Sättigungssignal f(t) wird durch einfache logische Verknüpfungen gebildet, wobei sich diese für die positive und die negative Halbwelle komplementär Verhalten. Daher wird nachfolgend lediglich auf die Bedingungen für Sättigung bei positiver Halbwelle näher eingegangen. Auf Sättigung wird bei positiver Halbwelle erkannt, wenn die Differenz zwischen zwei Abastwerten $i_A$ negativ ist. Als weitere Kriterien kann herangezogen werden, daß der Betrag der Steigung $\Delta i$ größer als das Produkt aus einem Steigungsfaktor K und einem gespeicherten Referenzwert $\Delta i_{max}$ ist, und daß das Stromsignal i(t) einen Abtastwert $i_A$ früher sättigungsfrei war. Zur Ermittlung des Referenzwertes $\Delta i_{max}$ wird z. B. während einer Referenzmessung mit ungesättigtem Wandler 1 der Betrag einer in einem entsprechenden Signalabschnitt aufgetretenen maximalen Differenz $\Delta i_{max}$ zwischen zwei zu unterschiedlichen Zeiten erfaßten Abtastwerten $i_A(t), i_A(t-\Delta t)$ gespeichert.

Durch Steuerung des Steigungsfaktors $K = |\Delta i|/\Delta i_{max}$ kann die Empfindlichkeit der Detektion des Sättigungsanfangs SA in einfacher Weise durch Variieren des Referenzwertes $\Delta i_{max}$ eingestellt werden. Der Korrekturfaktor K ist zweckmäßigerweise kleiner zwei (K < 2) und liegt - je nach Abtastfrequenz (1kHz oder 4kHz) und Signalabschnitt - zwischen K = 0,001 und K = 1,8. Vorzugswiese ist der Steigungsfaktor K = 0,6.

Ein Sättigungsanfang SA bei positiver Halbwelle wird somit sicher erkannt, wenn die Steigung $\Delta i$ negativ ist ($\Delta i < 0$), wenn der Betrag der Steigung $|\Delta i|$ größer als der mit dem Korrekturfaktor K gewichtete Referenzwert $\Delta i_{max}$ ($|\Delta i| > K^*\Delta i_{max}$) ist, und wenn mindestens ein früherer Abtastwerte $i_A$ sättigungsfrei und damit zum Zeitpunkt t-$\Delta t$ das Sättigungssignal f(t-$\Delta t$) = 0 war. In diesem Fall ist zum Zeitpunkt t das Sättigungssignal f(t) = 1.

Analog wird ein Sättigungsanfang SA bei negativer Halbwelle sicher erkannt, wenn die Steigung $\Delta i$ positiv ist ($\Delta i > 0$), wenn der Betrag der Steigung $|\Delta i|$ wiederum größer als der mit dem Korrekturfaktor K gewichtete Referenzwert $\Delta i_{max}$ ist ($|\Delta i| > K^*\Delta i_{max}$), und wenn mindestens ein früherer Abtastwerte $i_A$ wiederum sättigungsfrei war (f(t-$\Delta t$) = 0). In diesem Fall ist das Sättigungssignal f(t) = -1. Dabei gilt jeweils die Beziehung: $\Delta i(t) = i(t) - i(t-\Delta t)$.

Die Detektion des Sättigungsendes SE wird ebenfalls mittels weniger logischer Abfragen durchgeführt, so daß im Falle des Auftretens eines Sättigungsanfangs SA sicher auch ein Sättigungsende SE erkannt wird. Wie der vergrößerte rechte Ausschnitt aus FIG 2 zeigt, zeichnet sich erkanntermaßen das Sättigungsende SE ebenfalls durch ein charakteristisches Muster mit einem steilen, dünn gezeichneten Kurventeil $S_2$ aus, dem ein

flacher, fett gezeichneter Kurventeil $S_1$ vorangeht. Anhand eines Vergleichs der Steigung $\Delta i$ im Negativen mit einem Referenzwert $\Delta i_{max}$ wird erkannt, ob der Kurvenverlauf steil oder flach ist. Ist Sättigung im Positiven erkannt worden, so wird im Negativen zunächst ein solcher flacher Kurventeil $S_1$ ermittelt.

Für die Detektion des flachen Kurventeils $S_1$ werden als Kriterien herangezogen, daß das Sättigungssignal $f(t)$ gleich eins ist ($f(t) = 1$), daß sowohl das Stromsignal $i(t)$ als auch die Steigung $\Delta i$ negativ sind ($i(t) < 0$, $\Delta i < 0$), und daß das Verhältnis des Betrags der Steigung $\Delta i$ - auch von zwei aufeinanderfolgenden Abtastwerten $i_A$ - zum Referenzwert $\Delta i_{max}$ kleiner als ein Steigungsfaktor K', mit z. B. K' = 0,4, ist ($|\Delta i(t)$ und$(|\Delta i(t-\Delta t)| < 0,4^*\Delta i_{max})$).

Bei Vorliegen eines solchen flachen Kurvenstücks oder Kurventeils $S_1$ erfolgt eine Freigabe auf die Erkennung oder Detektion des nachfolgenden steilen Kurventeils $S_2$. Dieser befindet sich bei Sättigung im Positiven folglich im Negativen. Umgekehrt befindet sich bei Sättigung im Negativen dieses steile Kurvenstück $S_2$ im Positiven. Als Abfragebedingung wird wiederum die Steigung $\Delta i$ herangezogen. Außerdem wird zweckmäßigerweise als ein weiteres Kriterium herangezogen, daß der durch die jeweiligen Abtastwerte $i_A$ repräsentierte Betrag des Stromsignals $i_s$ an der entsprechenden Stelle innerhalb des Stromverlaufs $i(t)$ größer ist als die zweifache Amplitude des Nennstroms. Sind solche Kurventeile $S_1$, $S_2$ ermittelt worden, so wird auf Sättigungsende SE erkannt. Für die Freigabe gelten dann als weitere Bedingungen $|\Delta i(t)| > K^*\Delta i_{max}$ und $|i(t)| > 2^*2^\square I_n$, wobei $I_n$ die Amplitude des Nennstroms angibt.

Empirisch wurde für das Verhältnis $|\Delta i|/\Delta i_{max}$ ein Steigungsfaktor K = 0,6 ermittelt. Bei einer Netzkonstante $T_n$ = 100ms wird mit diesem Steigungsfaktor K bei vollverlagertem Primärstrom $I_p$ nach Ende der dritten Periode seit Kurzschlußbeginn auf Sättigungsende SE erkannt, so daß bei der daraufhin eingeleiteten Sättigungskorrektur über drei Perioden approximiert wird. Durch geeignete Verkleinerung des Sättigungsfaktors K kann auch bereits das erste Sättigungsende SE erkannt werden, das in diesem Beispiel nach etwa 15ms auftritt.

Zur Korrektur des gesättigten Stromsignalverlaufs $i_s(t)$ wird der ungesättigten Stromsignalverlauf $i(t)$ rekonstruiert. Unter Zugrundelegung des sogenannten Least-Square-Ansatzes, dessen Exponentialanteil zweckmäßigerweise unberücksichtigt bleibt, wird der Grundschwingungsanteil des Stromsignals $i(t)$ gemäß der Beziehung $i(t) = c_c \cos(\omega t) + c_s \sin(\omega t) + c_0$ berücksichtigt. Eine vollständige Rekonstruktion des ungesättigten Stromsignalverlaufs $i(t)$ ist somit nicht erforderlich. Vielmehr kann allein mit dem Grundschwingungsanteil ein ausreichend gutes Abbild des ungesättigten Stromsignalverlaufs erzeugt werden. Dies ist insbesondere bei nur wenigen verfügbaren Stützstellen oder Abtastwerten $i_A$ besonders vorteilhaft.

FIG 3 zeigt den gemäß dieses Ansatzes rekonstruierten Stromsignalverlauf $i_a(t)$, wobei der ungesättigte Stromsignalverlauf $i(t)$ die zu approximierende Größe darstellt. Wird die Approximation z. B. bei $t_1$ = 4ms gestartet, so stehen bei einer Abtastfrequenz von 4kHz sechzehn Stützstellen (Abtastwerte $i_A$) für den Algorithmus A des Aufbaufilters 11 zur Verfügung. Der Stromsignalverlauf $i_a(t)$ ist der über zwei Perioden approximierte Verlauf des Stromsignals i. Der Stromsignalverlauf $i_{50}(t)$ ist der tatsächliche Grundschwingungsanteil des Stromsignals i, während $i_{a50}(t)$ den approximierten Grundschwingungsanteil darstellt.

Ausgehend von einer von der Dauer einer ungesättigten Übertragung des Wandlers 1 bei Eintritt z. B. eines Kurzschlusses abhängigen minimalen Fensterbreite des Aufbaufilters 11 baut sich dieses im Anschluß an den Start des Algorithmus A bis zur Vollperiodenlänge auf. Tritt nun eine Störung z. B. in Form eines Kurzschlusses auf, so wird - nachdem mindestens ein Abtastwert $i_A$ über dem zweifachen Nennstrom liegt - das Filterfenster des Aufbaufilters 11 zunächst auf minimale Fensterbreite reduziert. Daraufhin baut es sich erneut auf. Tritt nun Sättigung ein, so werden mit Ausnahme mindestens des letzten Abtastwertes $i_A$ alle sich im Filterfenster befindenden Abtastwerte $i_A$ als Stützstellen für die Approximation herangezogen (FIG 2).

Durch die Ausblendung mindestens des letzten Abtastwertes $i_A$ wird sichergestellt, daß dieser nicht bereits zum gesättigten Stromsignalverlauf $i_s(t)$ gehört. Nach Detektion des Sättigungsendes SE kann noch solange weiter approximiert werden, bis sich das Filterfenster des Aufbaufilter 11 erneut auf minimale Breite mit Abtastwerten $i_A$ des ungesättigten Stromsignalverlaufs $i(t)$ aufgebaut hat. Ist dies erreicht, so schaltet der Algorithmus A erneut auf normale Filterung um. Daraufhin baut sich das Filterfenster erneut auf, bis entweder ein erneuter gesättigter Stromsignalverlauf $i_s(t)$ auftritt, oder bis der Zustand des Vollperiodenfilters erreicht ist.

Durch den im Algorithmus A eingesetzten Ansatz werden zur Approximation des Stromsignalverlaufs $i_a(t)$, $i_{a50}()$ lediglich drei Abtastwerte $i_A$ und damit lediglich drei Stützstellen benötigt. Daraus ergibt sich, daß der Wandler 1 bei einer Abtastfrequenz von 4kHz nur während einer Zeitspanne von 0,75ms und bei einer Abtastfrequenz von 1kHz nur über einen Zeitraum von 3ms ungesättigt übertragen muß.

**Patentansprüche**

1. Verfahren zur Erkennung und Korrektur eines gesättigten Stromverlaufs eines Stromwandlers (1) anhand eines für einen gesättigten Stromsignalverlauf ($i_s(t)$) charakteristischen Musters, **dadurch gekennzeichnet**,

   - daß aus einer Anzahl von aus Abtastwerten ($i_A$) des Stromsignalverlaufs ($i(t)$, $i_s(t)$) abgeleiteten logischen Abfragen ein Sättigungsanfang (SA) und ein zugehöriges Sättigungsende (SE) ermittelt werden, wobei zur Detektion des Sättigungsanfangs (SA) in einem Signalbereich Abtastwerte ($i_A$) zur Ermittlung der Signalsteigung ($\Delta i$) abgefragt werden, und wobei zur Detektion des Sättigungsendes (SE) in einem zum Sättigungsanfang (SA) komplementären Signalbereich Abtastwerte ($i_A$) zur Ermittlung der Signalsteigung ($\Delta i$) abgefragt werden, und

- daß zur Sättigungskorrektur aus einer Anzahl von sättigungsfreien Abtastwerten ($i_A$) ein Abbild ($i_a(t)$, $i_{a50}(t)$) des ungesättigten Stromsignalverlaufs ($i(t)$) erzeugt wird.

2. Verfahren nach Anspruch 1, **dadurch gekennzeichnet**, daß der Betrag der Steigung ($\Delta i$) verglichen wird mit einem mit einem einstellbaren Steigungsfaktor (K) gewichteten Referenzwert ($\Delta i_{max}$).

3. Verfahren nach Anspruch 2, **dadurch gekennzeichnet**, daß der Steigungsfaktor (K) zwischen K = 0,001 und K = 2 eingestellt wird.

4. Verfahren nach einem der Ansprüche 1 bis 3, **dadurch gekennzeichnet**, daß ein Sättigungssignal ($f(t)$) gebildet wird, das bei ungesättigtem Stromsignalverlauf $i_s(t)$ null ist ($f(t) = 0$), das bei gesättigtem Stromsignalverlauf $i_s(t)$ auf der positiven Halbwelle eins ist ($f(t) = 1$), und das bei Sättigung auf der negativen Halbwelle minus eins ist ($f(t) = -1$).

5. Verfahren nach einem der Ansprüche 1 bis 4, **dadurch gekennzeichnet**, daß der Sättigungsanfang (SA) bei positiver Halbwelle detektiert wird, wenn die Steigung ($\Delta i$) negativ ist ($\Delta i < 0$), wenn der Betrag der Steigung ($|\Delta i|$) größer als ein Referenzwert ($\Delta i_{max}$) ist, und wenn mindestens ein früherer Abtastwert ($i_A$) sättigungsfrei war.

6. Verfahren nach einem der Ansprüche 1 bis 4, **dadurch gekennzeichnet**, daß der Sättigungsanfang (SA) bei negativer Halbwelle detektiert wird, wenn die Steigung ($\Delta i$) positiv ist ($\Delta i > 0$), wenn der Betrag der Steigung ($|\Delta i|$) größer als ein Referenzwert ($\Delta i_{max}$) ist, und wenn mindestens ein früherer Abtastwert ($i_A$) sättigungsfrei war.

7. Verfahren nach einem der Ansprüche 1 bis 6, **dadurch gekennzeichnet**, daß zur Detektion des Sättigungsendes (SE) als zusätzliches Kriterium herangezogen wird, daß der Betrag des Stromsignals ($i_s$) größer als die zweifache Amplitude des Nennstoms ($I_n$) ist ($|i(t)| > 2 \times 2^\square I_n$) ist.

8. Vorrichtung zur Erkennung und Korrektur eines gesättigten Stromverlaufs eines Stromwandlers (1) anhand eines für einen gesättigten Stromsignalverlauf ($i_s(t)$) charakteristischen Musters, **gekenn-**

**zeichnet durch** einen dem Stromwandler (1) nachgeschalteten Analog/Digital-Wandler (5) zur Generierung von Abtastwerten ($i_A$) des aktuellen Stromsignalverlaufs ($i(t)$, $i_s(t)$), sowie durch eine Auswerteeinrichtung (7) mit einem Sättigungsdetektor (9) und mit einem Aufbaufilter (11) zur Ermittlung eines approximierten Stromsignalverlaufs ($i_a(t)$, $i_{a50}(t)$) anhand der Abtastwerte ($i_A$), wobei die nach einem der Ansprüche 1 bis 7 arbeitende Auswerteeinrichtung (7) einen Algorithmus (A) zur Generierung des ungesättigten Stromsignalverlaufs ($i(t)$) und des approximierten Stromsignalverlaufs ($i_a(t)$, $i_{a50}(t)$) bei Sättigungserkennung sowie eines Sättigungssignals ($f(t)$) aus den Abtastwerten ($i_A$) des aktuellen Stromsignalverlaufs ($i(t)$, $i_s(t)$) enthält.

EP 0 882 990 A2

$I_p$

1

$I_s$

5

$i_A$

3

7

9

11

13

Fig. 1

$i_A(t)$

A

i (t)

$i_a$ (t)

Re (i, $i_a$) + Im (i, $i_a$)

f (t)

Fig. 2

8

Fig. 3